# EUROPEAN PATENT APPLICATION

(11) **EP 4 657 487 A1**
(43) Date of publication of application: **03.12.2025**
(21) Application number: 24747173.3
(22) Date of filing: 16.01.2024
(51) Int. Cl.: H01J 35/16

(54) **X-RAY GENERATION DEVICE AND X-RAY IMAGING DEVICE**

(30) Priority: 25.01.2023 WO PCT/JP2023/002275; 13.09.2023 WO PCT/JP2023/033426
(71) Applicant: Canon Anelva Corporation, Kawasaki-shi, Kanagawa 215-8550 (JP)
(72) Inventor: KUWAJIMA, Atsuhiro, Kawasaki-shi, Kanagawa 215-8550 (JP); OKADA, Takahiro, Kawasaki-shi, Kanagawa 215-8550 (JP); SATO, Akio, Kawasaki-shi, Kanagawa 215-8550 (JP); TSUKAMOTO, Takeo, Kawasaki-shi, Kanagawa 215-8550 (JP)
(74) Representative: TBK
(86) International application number: PCT/JP2024/000981
(87) International publication number: WO 2024/157842

(57) **Abstract**

An X-ray generation apparatus includes an X-ray generation tube, a driving circuit, and an accommodating. The X-ray generation tube includes an insulating tube with a first opening end and a second opening end, cathode arranged to close the first opening end of the insulating tube and including an electron emitting portion, and an anode arranged to close the second opening end and including a target with which electrons from the electron emitting portion collide. The accommodating container has a third opening end, and the X-ray generation tube is arranged to close the third opening end. The accommodating container is filled with an insulating liquid. The accommodating container defines a first space storing the driving circuit, and a second space protruding from the first space and storing at least a part of the X-ray generation tube. The accommodating container includes a protrusion portion surrounding the second space, and one end of the second space forms the third opening end. A portion of an outer surface of the insulating tube is surrounded by an X-ray shielding member extending from the anode toward the cathode so as to block X-rays. The X-ray shielding member is covered with an insulating member.

## Description

### TECHNICAL FIELD

The present invention relates to an X-ray generation apparatus and an X-ray imaging apparatus.

### BACKGROUND ART

PTL 1 describes an X-ray generation apparatus that includes an X-ray generation tube, a tube driving circuit which drives the X-ray generation tube, and an accommodating container which accommodates the X-ray generation tube and the tube driving circuit. The accommodating container is filled with an insulating liquid, and the insulating liquid ensures insulating performance between the X-ray generation tube and the tube driving circuit.

### CITATION LIST

### PATENT LITERATURE

PTL 1: Japanese Patent Laid-Open No. 2016-103451

### SUMMARY OF INVENTION

When an X-ray generation apparatus is used for a long period, abnormal discharge sometimes occurs in an X-ray generation tube. It has been found by studies of the present inventor that abnormal discharge occurs between the cathode and anode of the X-ray generation tube via the outer surface of an insulating tube. The abnormal discharge may cause the X-ray generation apparatus to stop or fail.

One aspect of the present invention provides a technique advantageous in suppressing the occurrence of abnormal discharge in an X-ray generation apparatus.

A first aspect of the present invention is directed to an X-ray generation apparatus, and the X-ray generation apparatus comprises: an X-ray generation tube including an insulating tube with a first opening end and a second opening end, a cathode arranged to close the first opening end of the insulating tube and including an electron emitting portion, and an anode arranged to close the second opening end and including a target that generates X-rays when electrons from the electron emitting portion collide; a driving circuit configured to drive the X-ray generation tube, and an accommodating container configured to accommodate the X-ray generation tube and the driving circuit, wherein the accommodating container has a third opening end, and the X-ray generation tube is arranged to close the third opening end, the accommodating container is filled with an insulating liquid, the accommodating container defines a first space storing the driving circuit, and a second space protruding from the first space and storing at least a part of the X-ray generation tube, the accommodating container includes a protrusion portion surrounding the second space, and one end of the second space forms the third opening end, a portion of an outer surface of the insulating tube is surrounded by an X-ray shielding member extending from the anode toward the cathode so as to block X-rays, and the X-ray shielding member is covered with an insulating member.

A second aspect of the present invention is directed to an X-ray imaging apparatus comprising: an X-ray generation apparatus defined as the first aspect; and an X-ray detector configured to detect X-rays emitted from the X-ray generation apparatus.

### BRIEF DESCRIPTION OF DRAWINGS

Fig. 1 is a view schematically showing the arrangement of a conventional X-ray generation apparatus for explaining the basic arrangement of an X-ray generation apparatus according to the present disclosure;
Fig. 2 is a view exemplarily and schematically showing the arrangement of an X-ray generation apparatus according to the first embodiment;
Fig. 3 is a view exemplarily and schematically showing the arrangement of an X-ray generation apparatus according to the second embodiment;
Fig. 4 is a view exemplarily and schematically showing the arrangement of an X-ray generation apparatus according to the third embodiment;
Fig. 5 is a view exemplarily and schematically showing the arrangement of an X-ray generation apparatus according to the fourth embodiment;
Fig. 6 is a view schematically showing the occurrence of abnormal discharge;
Fig. 7 is a view exemplifying a triboelectric series in triboelectrification with an insulating liquid;
Fig. 8 is a view for explaining a problem in an X-ray generation apparatus according to the fifth embodiment;
Fig. 9 is a view exemplarily and schematically showing the arrangement of the X-ray generation apparatus according to the fifth embodiment;
Fig. 10 is a view schematically showing the arrangement of the first modification of the X-ray generation apparatus according to the fifth embodiment;
Fig. 11 is a view schematically showing the arrangement of the second modification of the X-ray generation apparatus according to the fifth embodiment;
Fig. 12 is a view exemplarily and schematically showing the arrangement of an X-ray generation apparatus according to the sixth embodiment;
Fig. 13 is a view schematically showing the arrangement of a modification of the X-ray generation apparatus according to the sixth embodiment;
Fig. 14 is a view exemplarily and schematically showing the arrangement of an X-ray generation apparatus according to the seventh embodiment;
Fig. 15 is a view schematically showing the arrangement of a modification of an X-ray generation apparatus according to the eighth embodiment; and
Fig. 16 is a block diagram showing the arrangement of an X-ray imaging apparatus according to an embodiment.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

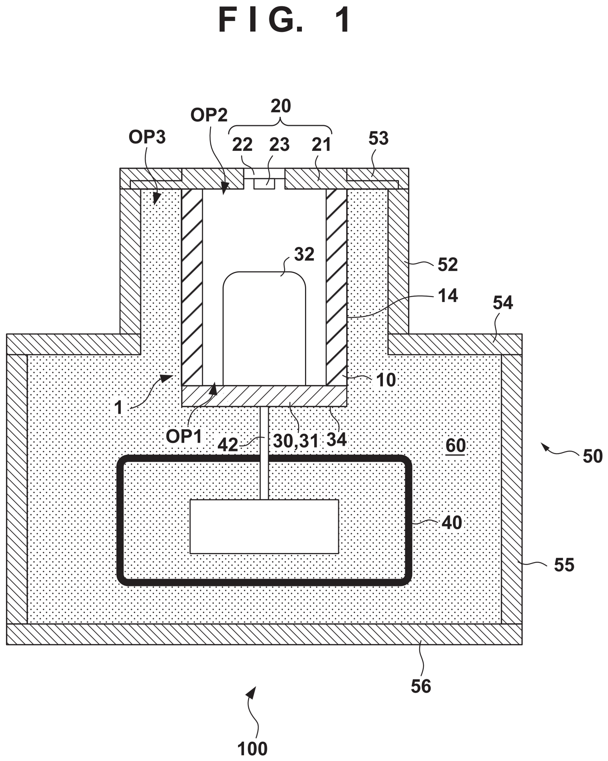

The basic arrangement of an X-ray generation apparatus 100 according to the present disclosure will be described first with reference to Fig. 1. The X-ray generation apparatus 100 can include an X-ray generation tube 1 and an accommodating container 50 that accommodates the X-ray generation tube 1. The X-ray generation apparatus 100 may further include a driving circuit 40 that drives the X-ray generation tube 1, and the driving circuit 40 is accommodated in the accommodating container 50 and can be connected to the X-ray generation tube 1 via a cable 42. A part (an anode 20 to be described later) of the X-ray generation tube 1 can be exposed to the external space of the accommodating container 50 (the external space of the X-ray generation apparatus 100). The internal space of the accommodating container 50 is filled with an insulating liquid 60. From another viewpoint, the internal space of the accommodating container 50 is filled with the insulating liquid 60 except for a space occupied by components (the X-ray generation tube 1, the cable 42, and the like) accommodated in the accommodating container 50. The insulating liquid 60 can be, for example, an insulating oil such as a mineral oil or a chemical synthetic oil. Alternatively, the insulating liquid 60 may be a liquid other than an insulating oil, for example, a fluorine-based inert liquid (for example, Fluorinert^{™}).

The X-ray generation tube 1 can include an insulating tube 10, a cathode 30, and the anode 20. A vacuum is maintained in the internal space of the X-ray generation tube 1. The insulating tube 10 can have a first opening end OP1 and a second opening end OP2. The insulating tube 10 can have a tubular shape such as a cylindrical shape. The insulating tube 10 can be configured to provide vacuum airtightness and insulating properties of the internal space of the insulating tube 10. The insulating tube 10 can be made of, for example, a ceramic material mainly containing alumina or zirconia. Alternatively, the insulating tube 10 can be made of a glass material such as borosilicate glass.

The cathode 30 can be arranged to close the first opening end OP1 of the insulating tube 10. The cathode 30 includes an electron emitting portion 32. From another viewpoint, the cathode 30 can include a closing member 31 arranged to close the first opening end OP1 of the insulating tube 10, and the electron emitting portion 32 supported by the closing member 31. The surface of the closing member 31 can constitute an outer surface 34 of the cathode 30. The cathode 30 may be arranged such that a member having a cathode potential does not contact the insulating liquid 60. The anode 20 can be arranged to close the second opening end OP2 of the insulating tube 10. The anode 20 can include a target 23 that generates X-rays when electrons from the electron emitting portion 32 collide therewith. The anode 20 can include a target holding plate 22 that holds the target 23, and an electrode 21 that supports the target holding plate 22. The electrode 21 is formed by a conductor, and is electrically connected to the target 23 to apply a potential to the target 23. The anode 20 and the accommodating container 50 can be maintained at, for example, the ground potential but may be maintained at another potential. The target 23 can be made of a material having a high melting point and high generation efficiency of X-rays, such as tungsten, tantalum, or molybdenum. The target holding plate 22 can be made of, for example, a material that can easily transmit X-rays, such as beryllium or diamond.

The accommodating container 50 can have a third opening end OP3. The accommodating container 50 can include, for example, a first portion 52, a second portion 53, a third portion 54, a fourth portion 55, and a fifth portion 56. The first portion 52 can have a tubular shape such as a cylindrical shape. The first portion 52 can define the third opening end OP3 of the accommodating container 50. In other words, the first portion 52 can include the third opening end OP3. The second portion 53 is formed by a conductor, and is electrically connected to the anode 20 of the X-ray generation tube 1. It may be understood that the second portion 53 forms the anode together with the electrode 21. The second portion 53 can have a ring shape or a frame shape. The second portion 53 can be arranged to contact the insulating liquid 60. Alternatively, a conductive member including the electrode 21 and the second portion 53 can be arranged to contact the insulating liquid 60. The electrode 21 and the second portion 53 may be formed as a single piece of the same material. The fourth portion 55 can have a tubular shape such as a cylindrical shape or a rectangular tubular shape. The third portion 54 is connected to one end of the fourth portion 55, and can have a ring shape or a frame shape. The first portion 52 can be connected to the third portion 54 to project from the third portion 54. The fifth portion 56 can be connected to the other end of the fourth portion 55. Alternatively, the third portion 54, the fourth portion 55, and the fifth portion 56 may be integrated to have a hollow spherical shape, except for the joint portion with the first portion 52.

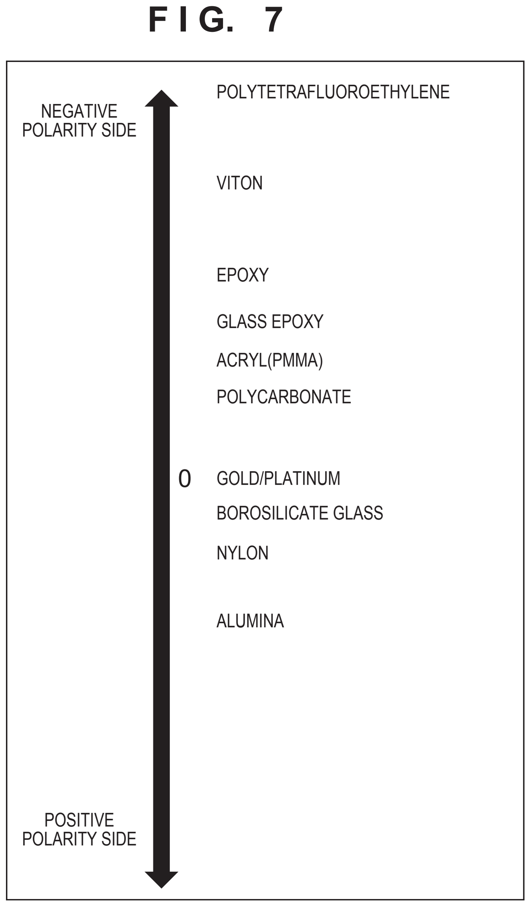

The insulating liquid 60 can cause convection in the internal space of the accommodating container 50. When an entire outer surface 14 of the insulating tube 10 contacts the insulating liquid 60, the insulating tube 10 and the insulating liquid 60 can be charged by friction between the insulating liquid 60 and the outer surface 14 of the insulating tube 10. This charging is called triboelectrification. In general, triboelectrification indicates a phenomenon that friction between two different types of materials causes charges to move between the two types of materials, and thus one material is charged to positive polarity and the other material is charged to negative polarity. The present inventor performed an experiment of measuring the potential of the outer surface of the insulating tube by a surface electrometer after leaving the insulating tube in a convecting insulating oil (insulating liquid). As a result, it was confirmed that the outer surface of the insulating tube was charged to positive polarity and the amount of charge increased in proportion to the time. Charging polarity by friction depends on the characteristics of materials that are rubbed together. Examples of the characteristics of the materials are a triboelectric series and relative permittivity. Fig. 7 shows an example of a triboelectric series with respect to an insulating oil. The triboelectric series indicates positive polarity or negative polarity to which the rubbed material is charged and the ordering of easiness of charging. In the triboelectric series, a material located on the positive polarity side is readily charged to positive polarity and a material located on the negative polarity side is readily charged to negative polarity.

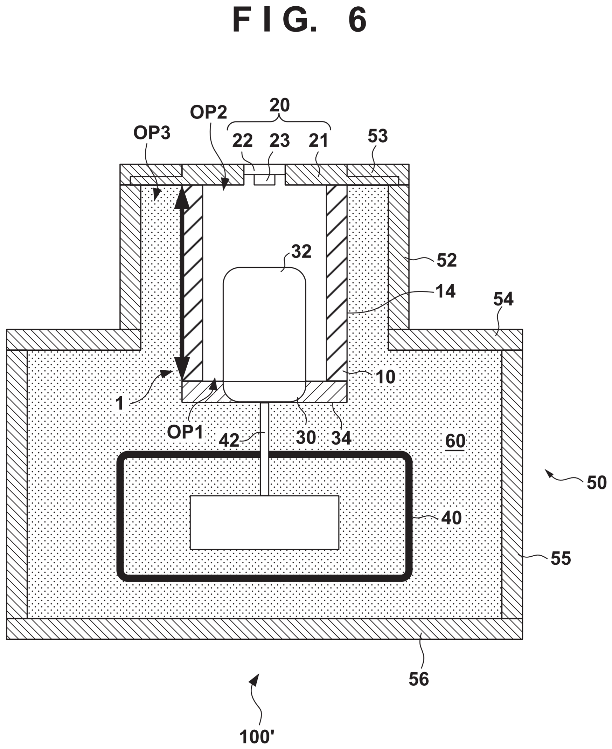

When the outer surface 14 of the insulating tube 10 is charged to positive polarity, the insulating performance between the cathode 30 and the anode 20 may lower. The insulating performance between the cathode 30 and the anode 20 may depend on a potential difference between the cathode 30 and the anode 20, resistance between the cathode 30 and the anode 20, a distance between the cathode 30 and the anode 20, and the like. As a result of the experiment, it was found that when the insulating tube 10 was charged to positive polarity, the cathode 30 and the anode 20 were short-circuited via the outer surface 14 of the insulating tube 10, as schematically indicated by a thick arrow in Fig. 6. In addition, as a result of the experiment, it was found that when the outer surface 14 of the insulating tube 10, the cathode 30, and the insulating liquid 60 formed a triple point, abnormal discharge readily occurred due to an electron avalanche.

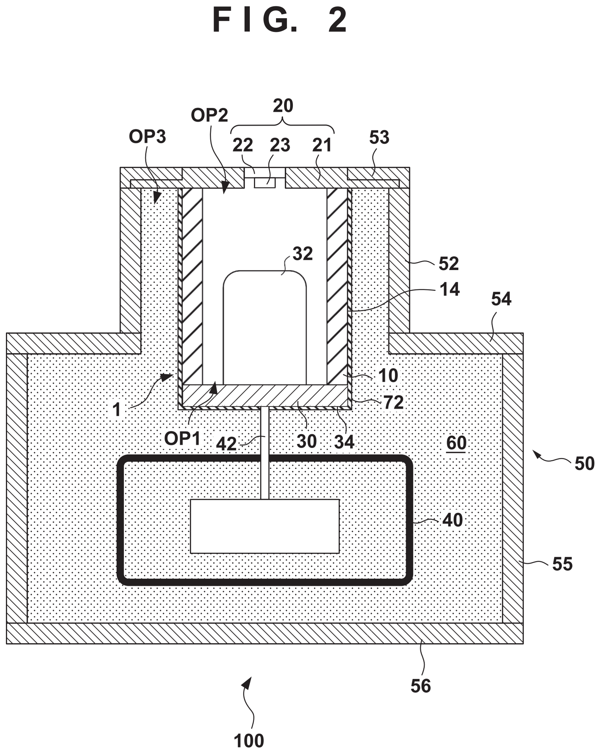

The X-ray generation apparatus 100 of the present disclosure will exemplarily be described below through a plurality of embodiments shown in Figs. 2, 3, 4, and 5. Matters not to be mentioned below can comply with the basic arrangement described with reference to Fig. 1.

Fig. 2 exemplarily and schematically shows the arrangement of an X-ray generation apparatus 100 according to the first embodiment. An accommodating container 50 can be filled with an insulating liquid 60 to contact a part (for example, a second portion 53) of an anode and cover an outer surface 14 of an insulating tube 10 and an outer surface 34 of a cathode 30. In the X-ray generation apparatus 100 of the first embodiment, at least a part of the insulating tube 10 is surrounded by a member 72 so as to reduce abnormal discharge between the cathode 30 and an anode 20 via the insulating tube 10. The member 72 can be made of an insulating material. More specifically, in the X-ray generation apparatus 100 of the first embodiment, the entire region of the outer surface 34 of the insulating tube 10 can be surrounded by the member 72. From another viewpoint, the entire region of the outer surface 14 of the insulating tube 10 can be covered with the member 72. In addition to the entire region of the outer surface 14 of the insulating tube 10, the entire region of the outer surface 34 of the cathode 30 can be covered with the member 72. The first embodiment is effective in avoiding the outer surface 14 of the insulating tube 10, the cathode 30, and the insulating liquid 60 from forming a triple point, thereby making it possible to reduce the occurrence of abnormal discharge.

To reduce abnormal discharge between the cathode 30 and the anode 20 via the insulating tube 10, the material of the member 72 is decided so that triboelectrification between the member 72 and the insulating liquid 60 causes the member 72 to be charged to negative polarity and the insulating liquid 60 to be charged to positive polarity. In a case where an insulating oil is adopted as the insulating liquid 60, for example, the material of the member 72 can be selected so that triboelectrification between the member 72 and the insulating oil causes the member 72 to be charged to negative polarity in accordance with the triboelectric series exemplified in Fig. 7. As the material of the member 72, for example, polytetrafluoroethylene (Teflon^{™}), PMMA (polymethyl methacrylate resin), epoxy, and fluorine rubber (for example, Viton^{™}) are preferable. The member 72 is arranged to cover the entire region of the outer surface 14 of the insulating tube 10 and the entire region of the outer surface 34 of the cathode 30, and for example, a mold method, a spray method, a dip method, or the like can thus be applied.

To reduce abnormal discharge between the cathode 30 and the anode 20 via the insulating tube 10, the material of the member 72 can be decided so that a difference in relative permittivity between the member 72 and the insulating liquid 60 is smaller than a difference in relative permittivity between the member 72 and the insulating tube 10. For example, the member 72 is made of Viton having relative permittivity of 3 or polytetrafluoroethylene having relative permittivity of 2.1, and the insulating tube 10 is made of borosilicate glass having relative permittivity of 4.9 or alumina having relative permittivity of 9. The fact that a difference in relative permittivity between the member 72 and the insulating liquid 60 is smaller than a difference in relative permittivity between the member 72 and the insulating tube 10 may be evaluated at a temperature when generating X-rays or at room temperature (for example, 25°C). However, there is no large difference between the former case and the latter case.

A mold method preferable to form the member 72 so as to cover an X-ray generation tube 1 (the outer surface 14 of the insulating tube 10 and the outer surface 34 of the cathode 30) will now be described. The material of the member 72, that is, the covering material is obtained by kneading a principal agent and a curing assistant in advance by a kneading device so as not to contain bubbles, and can be held at a constant temperature to maintain an appropriate flow. In a case of an epoxy-based resin, the temperature is, for example, about 100°C but the temperature can appropriately be decided in accordance with the material to be used. The covering material can be poured into a container having a size larger than the X-ray generation tube 1 to be covered. At this time, the covering material can be cooled rapidly due to the temperature difference between the container and the covering material, thereby degrading liquidity of the covering material. To prevent this, the container is desirably heated in advance. After the covering material poured into the container is caused to overflow from the container, the covering material can be solidified at an appropriate cooling rate and temperature distribution not to cause a problem such as shrinkage.

In the X-ray generation tube 1, a high voltage is applied between the anode 20 and the cathode 30. Therefore, if a bubble having a small dielectric constant exists in the member 72 made of the covering material, the electric field is concentrated on the bubble, thereby inducing abnormal discharge. To avoid this, a space where processing of filling the covering material is performed can be exhausted in advance using a vacuum pump to obtain a vacuum degree of about several hundred to several thousand Pa. Furthermore, to improve adhesion between the covering material and the X-ray generation tube 1, the X-ray generation tube 1 may be covered with the member 72 after applying a primer material to the surface of the X-ray generation tube 1 or forming unevenness by blast processing. The thickness of the member 72 is desirably small from a viewpoint of heat dissipation of the X-ray generation tube 1. For example, the thickness of the member 72 is preferably 5 mm or less, and more preferably 3 mm or less. For example, the thickness of the member 72 is preferably 0.3 mm or more, and more preferably 0.5 mm or more.

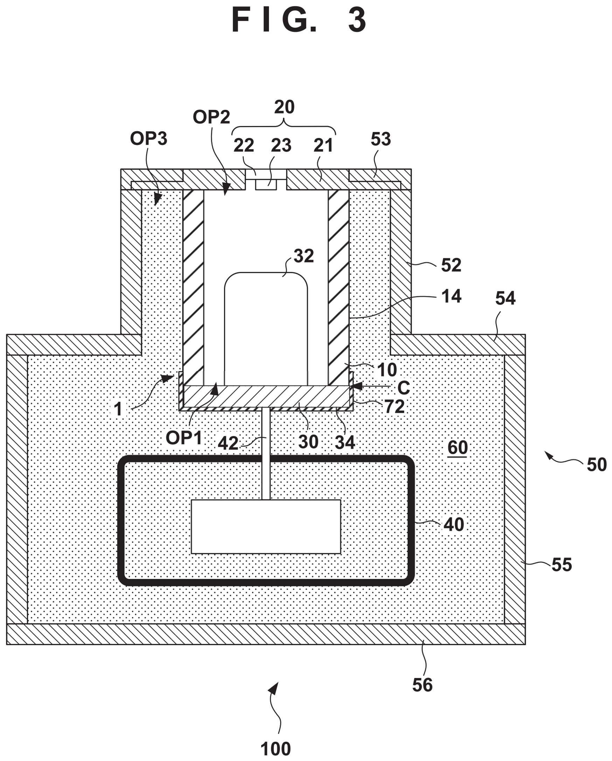

Fig. 3 exemplarily and schematically shows the arrangement of an X-ray generation apparatus 100 according to the second embodiment. Matters not mentioned in the second embodiment can comply with the first embodiment or the basic arrangement described with reference to Fig. 1. A member 72 can be arranged to cover a contact portion C between a cathode 30 and an insulating tube 10. Furthermore, the member 72 can be arranged to cover the cathode 30. The second embodiment is also effective in avoiding an outer surface 14 of the insulating tube 10, the cathode 30, and an insulating liquid 60 from forming a triple point, thereby making it possible to reduce the occurrence of abnormal discharge.

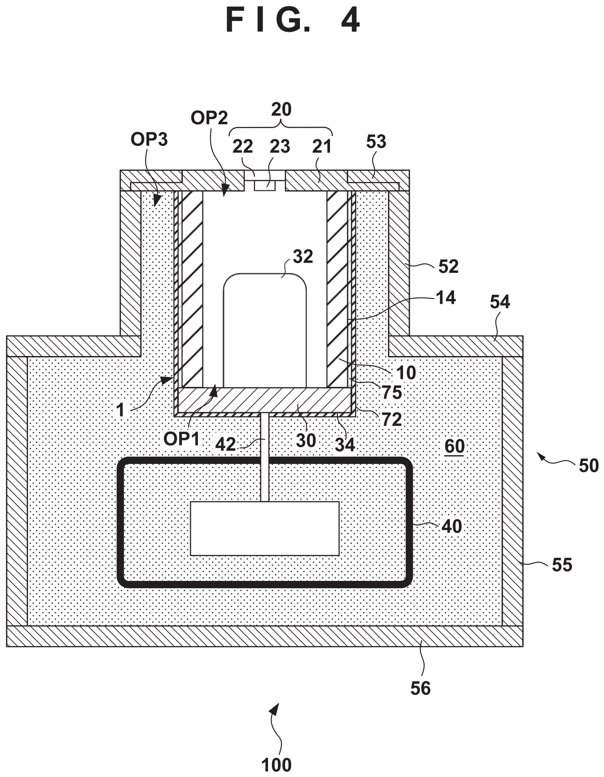

Fig. 4 exemplarily and schematically shows the arrangement of an X-ray generation apparatus 100 according to the third embodiment. Matters not mentioned in the third embodiment can comply with the first or second embodiment or the basic arrangement described with reference to Fig. 1. In the third embodiment, an intermediate layer 75 is provided between a member 72 and an insulating tube 10. The intermediate layer 75 can be made of an insulating material. The intermediate layer 75 can be configured to cover the insulating tube 10. The member 72 can be configured to cover the intermediate layer 75. The intermediate layer 75 can be made of at least one of, for example, Kovar glass, nylon, and a mixture containing a metal oxide that contains silica as a main component. Providing the intermediate layer 75 is advantageous in, for example, forming a smooth surface to cover an outer surface 14 of the insulating tube 10. Forming the intermediate layer 75 is advantageous in suppressing a foreign substance from entering between particles forming the insulating tube 10. As a result, it is possible to improve a creepage withstand voltage on the surface of the member 72 arranged to cover the insulating tube 10. This can prevent abnormal discharge, thereby increasing the life of the X-ray generation apparatus 100.

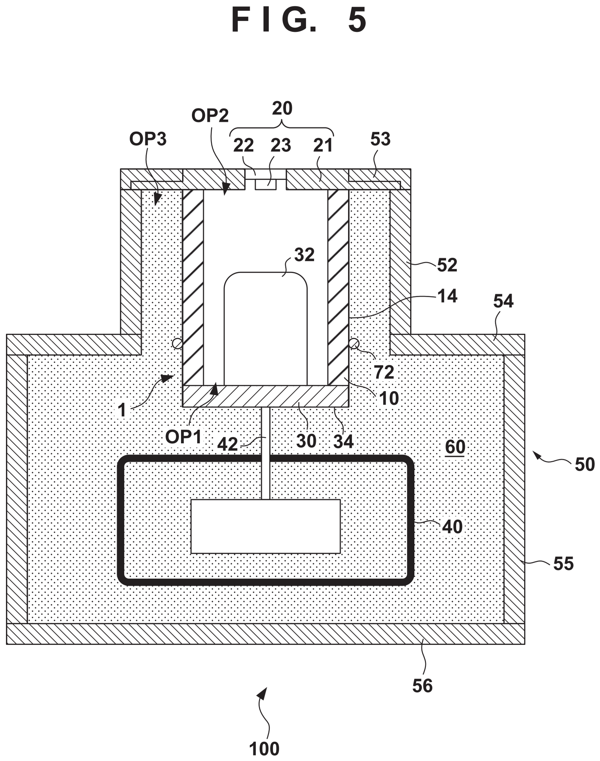

Fig. 5 exemplarily and schematically shows the arrangement of an X-ray generation apparatus 100 according to the fourth embodiment. Matters not mentioned in the fourth embodiment can comply with the first to third embodiments or the basic arrangement described with reference to Fig. 1. In the fourth embodiment, a member 72 can include a ring-shaped portion. Alternatively, the member 72 can be a ring-shaped portion. The ring-shaped portion can surround the whole circumference of a part in the axial direction (that is the axial direction of an insulating tube 10 and is also a direction in which an electron beam is emitted from an electron emitting portion 32) of an outer surface 14 of the insulating tube 10. The outer surface 14 of the insulating tube 10 can contact an insulating liquid 60 in a region other than the region surrounded by the member 72. The shortest distance between the member 72 and a cathode 30 is preferably smaller than the shortest distance between the member 72 and an anode 20. The insulating tube 10 may be surrounded by a plurality of members 72 (ring-shaped portions). The plurality of members 72 can be arranged apart from each other with respect to the axial direction of the insulating tube 10. The member 72 can be formed by, for example, Viton. Even if the outer surface 14 of the insulating tube 10 is charged to positive polarity, the amount of charge to positive polarity on the entire outer surface 14 of the insulating tube 10 can be reduced when the member 72 is charged to negative polarity. This can reduce the occurrence of abnormal discharge.

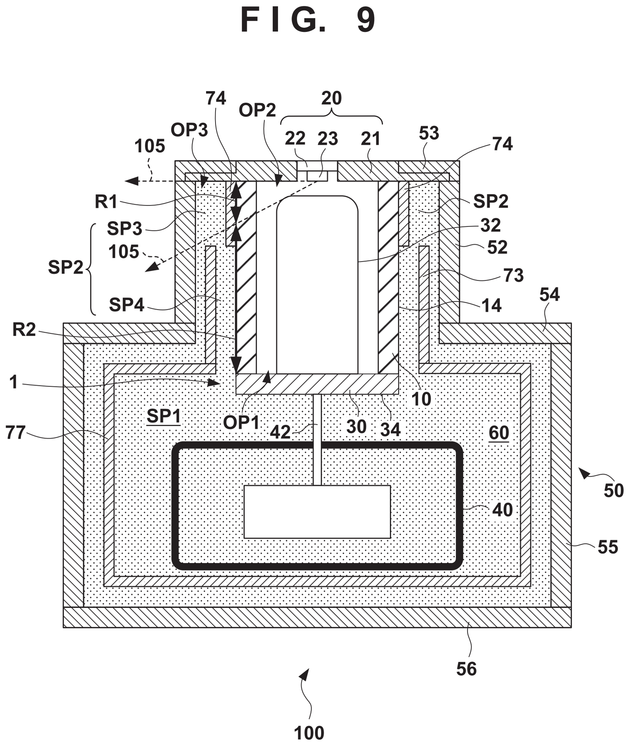

Fig. 9 exemplarily and schematically shows the arrangement of an X-ray generation apparatus 100 according to the fifth embodiment. Matters not mentioned in the fifth embodiment can comply with the first to fourth embodiments or the basic arrangement described with reference to Fig. 1. An accommodating container 50 can define a first space SP1 storing a driving circuit 40, and a second space SP2 protruding from the first space SP1 and storing at least a part of an X-ray generation tube 1. The other part of the X-ray generation tube 1 can be arranged in the first space SP1. A third portion 54, a fourth portion 55, and a fifth portion 56 can define the first space SP1. On the other hand, a first portion 52 and a second portion 53 can define the second space SP2. One end of the second space SP2 can form a third opening end OP3. The first portion 52 can form a protrusion portion protruding from the third portion 54. The second space SP2 protrudes from the first space SP1, and can have the third opening end OP3.

X-rays generated in a target 23 can be emitted in all directions. Therefore, X-rays generated in the target 23 include, in addition to X-rays emitted outside the X-ray generation apparatus 100 and irradiated to a measurement target object, rear X-rays 105 which are X-rays traveling toward the inside of the X-ray generation apparatus 100 (for example, a cathode 30 or an insulating tube 10).

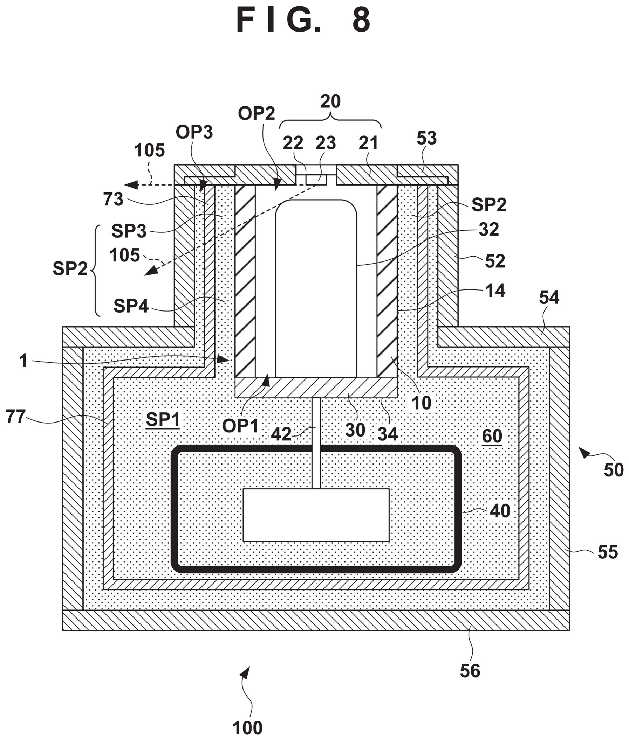

To improve the insulating performance between the X-ray generation tube 1 and the first portion 52, it is conceivable to arrange a first insulating member 73 in a space between the X-ray generation tube 1 and the first portion 52, that is, in the second space SP2 as shown in Fig. 8. The first insulating member 73 can be arranged spaced apart from the first portion 52 and the X-ray generation tube 1. The first insulating member 73 may be connected to a third insulating member 77 arranged in the first space SP1 to surround the driving circuit 40. The third insulating member 77 can be arranged spaced apart from the accommodating container 50.

Each of the first insulating member 73 and the third insulating member 77 can be made of one of polytetrafluoroethylene, PMMA (polymethyl methacrylate resin), an epoxy resin, polycarbonate, glass, and a ceramic. Each of the first insulating member 73 and the third insulating member 77 may be formed from a resin-impregnated glass fabric laminated body (for example, a laminated plate or a laminated tube) formed by hot-press molding. The resin-impregnated glass fabric laminated body can be formed by, for example, laminating or winding members (prepregs) prepared by impregnating a glass nonwoven fabric in a resin such as an epoxy resin or a phenol resin and then performing hot-press molding. Each of the first insulating member 73 and the third insulating member 77 may be made of, for example, glass epoxy. Each of the first insulating member 73 and the third insulating member 77 preferably has an insulating property of 1 × 10⁵ Ωm or more in a volume resistance at 25°C.

As a result of continuing to generate X-rays in the X-ray generation apparatus 100 having the arrangement shown in Fig. 8, a problem occurred in which abnormal discharge occurred between the first insulating member 73 and the X-ray generation tube 1. When the cause was investigated, it was found that abnormal discharge occurred in a portion of the first insulating member 73 where the rear X-rays 105 were irradiated. Further investigation revealed that the first insulating member 73 became charged due to irradiation with the rear X-rays 105, and abnormal discharge occurred between the first insulating member 73 and a portion of the X-ray generation tube 1 facing the first insulating member 73. However, if a space without the first insulating member 73 is provided in the portion irradiated with the rear X-rays 105, the insulating performance between the X-ray generation tube 1 and the first portion 52 decreases.

To solve this problem, in the fifth embodiment, as exemplified in Fig. 9, the arrangement region of the first insulating member 73 is limited, and a second insulating member 74 is added. For the sake of descriptive convenience, the second space SP2 is defined as a space including a third space SP3 and a fourth space SP4. The third space SP3 is a space where X-rays (rear X-rays 105) from the target 23 enter without being blocked by either the cathode 30 or an anode 20. The fourth space SP4 is a space where X-rays (rear X-rays 105) from the target 23 are blocked by one of the cathode 30 (including an electron emitting portion 32) and the anode 20 (that is, a space where X-rays from the target 23 do not enter). In the fifth embodiment, in the fourth space SP4, the first insulating member 73 is arranged spaced apart from the insulating tube 10 and the accommodating container 50 to surround the insulating tube 10, and the first insulating member 73 is not arranged in the third space SP3. An outer surface 14 of the insulating tube 10 has a first region R1 which is not surrounded by the first insulating member 73, and the first region R1 is surrounded by the second insulating member 74 arranged to contact the first region R1. Here, the entire first region R1 is preferably surrounded by the second insulating member 74. Note that the rear X-rays 105 include not only X-rays reaching directly from the target 23 but also X-rays reflected by members such as the cathode 30 and the anode 20.

The outer surface 14 of the insulating tube 10 has a second region R2 between the first region R1 and the cathode 30, and the first insulating member 73 can be arranged to surround the entire second region R2. The first insulating member 73 can be arranged to extend from the fourth space SP4, which is a part of the second space SP2, to the first space SP1. The second insulating member 74 can include a ring-shaped portion. The second insulating member 74 can be made of one of polytetrafluoroethylene, PMMA (polymethyl methacrylate resin), and an epoxy resin.

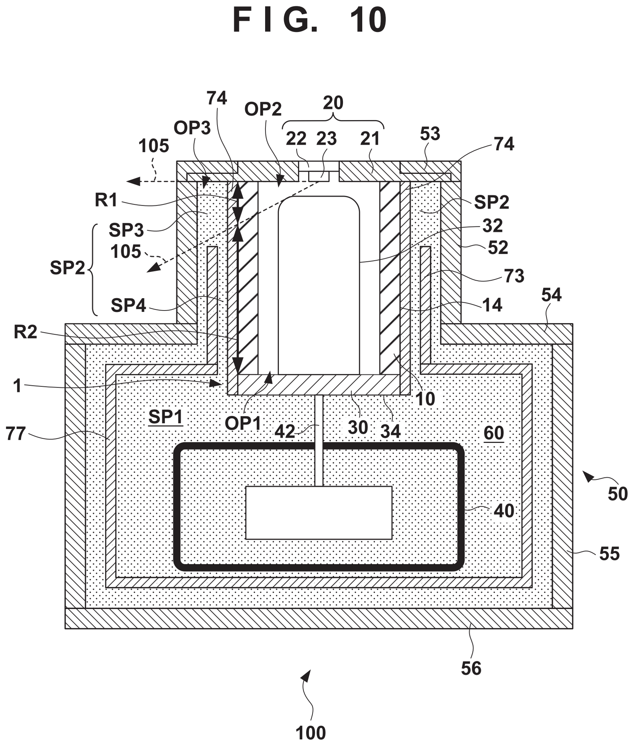

As exemplified in Fig. 10, the second insulating member 74 is preferably arranged to cover a contact portion (boundary) between the cathode 30 and the insulating tube 10. From another viewpoint, the second insulating member 74 can be arranged to cover at least a part of the cathode 30, and preferably the entire cathode 30. The second insulating member 74 is preferably arranged to cover the entire outer surface 14 of the insulating tube 10. Similar to the member 72 in the first embodiment, the second insulating member 74 can cover the outer surface 14 of the insulating tube 10 or be arranged on the first region R1 by a mold method, a spray method, a dip method, or the like. Here, when the mold method is applied, the second insulating member 74 may be molded using a mold separately from other members, that is, as a single piece, or may be molded integrally with the insulating tube 10 using a mold, like in insert molding.

A manufacturing method of the X-ray generation apparatus 100 as exemplified in Fig. 8 can include a step of inserting the first insulating member 73 in a gap between the X-ray generation tube 1 and the first portion 52. In this step, if the first insulating member 73 contacts or collides with the X-ray generation tube 1 or the first portion 52, these members can be deformed or particles can be generated by friction. This deformation and generation of particles can decrease the breakdown voltage performance, and cause abnormal discharge. Particularly, the larger the dimension of the first insulating member 73 in a direction in which electrons are emitted (the axial direction of the X-ray generation tube 1), the more likely these problems are to occur, and this can decrease the yield of the X-ray generation apparatus 100. Therefore, decreasing the dimension of the first insulating member 73 in the direction in which electrons are emitted (the axial direction of the X-ray generation tube 1) as exemplified in Fig. 9 is advantageous in improving the yield of the X-ray generation apparatus 100.

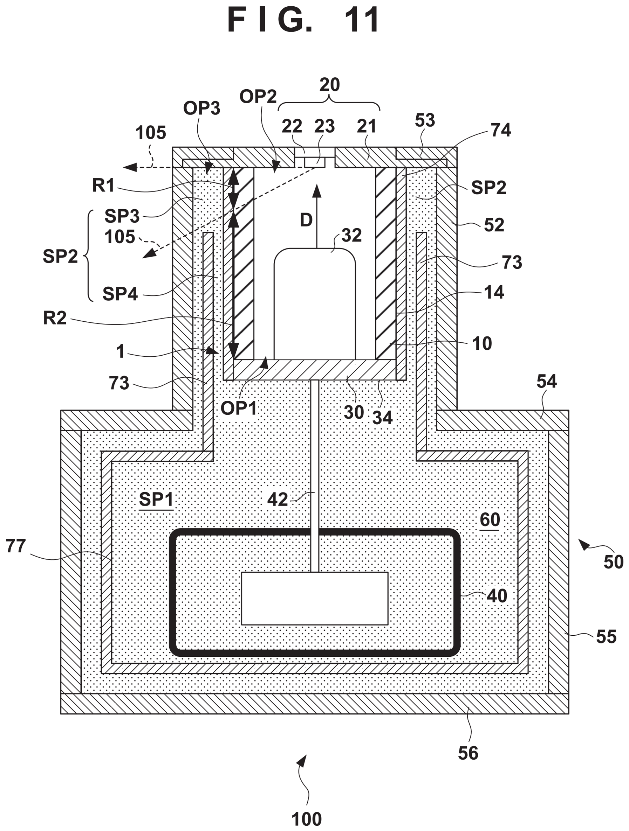

As exemplified in Fig. 11, the entire insulating tube 10 (or X-ray generation tube 1) may be arranged in the second space SP2. In other words, in the direction in which electrons are emitted (the axial direction of the X-ray generation tube 1), the dimension of the insulating tube 10 (or X-ray generation tube 1) may be smaller than the dimension of the first portion 52. In this case, a cable 42 can exist on a boundary between the first space 1 and the second space 2.

In the fifth embodiment, an insulation measure may also be taken between the cathode 30 and the anode 20, as in the first and fourth embodiments.

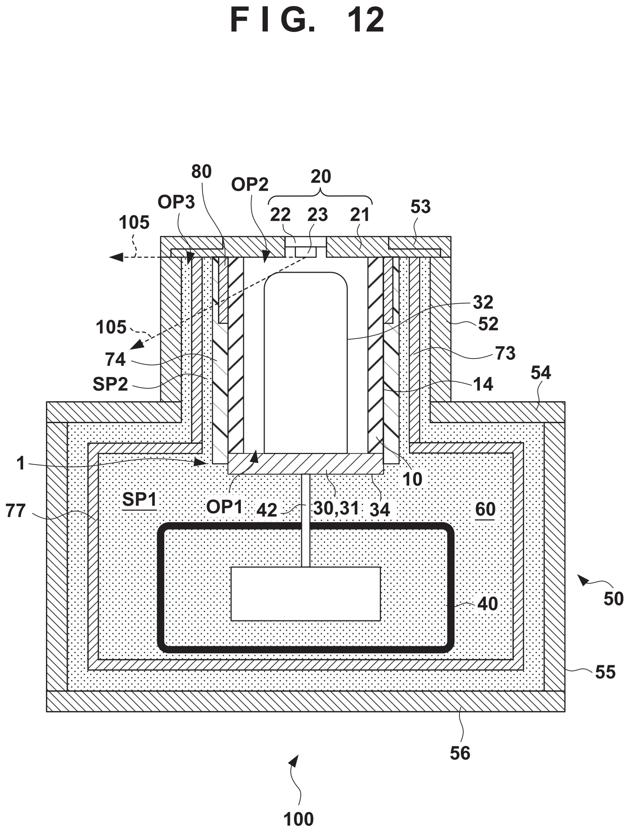

Fig. 12 exemplarily and schematically shows the arrangement of an X-ray generation apparatus 100 according to the sixth embodiment. Matters not mentioned in the sixth embodiment can comply with the first to fifth embodiments or the basic arrangement described with reference to Fig. 1. In the fifth embodiment exemplified in Fig. 9, abnormal discharge caused by the rear X-rays 105 is suppressed by limiting the arrangement region of the first insulating member 73. In the sixth embodiment, abnormal discharge caused by rear X-rays 105 is suppressed without limiting the arrangement region of a first insulating member 73 (insulating partition). In the sixth embodiment exemplified in Fig. 12, an X-ray shielding member 80 is provided. The X-ray shielding member 80 can be arranged such that a portion of an outer surface 14 of an insulating tube 10 is surrounded by the X-ray shielding member 80. The X-ray shielding member 80 can extend from an anode 20 toward a cathode 30 (a closing member 31 thereof) so as to block X-rays (rear X-rays 105). The X-ray shielding member 80 can be arranged to extend from the anode 20 to a position between the anode 20 and the cathode 30 (the closing member 31 thereof). By providing the X-ray shielding member 80, it is possible to eliminate or decrease the space where X-rays (rear X-rays 105) from a target 23 enter without being blocked by the cathode 30 or the anode 20, that is, the third space SP3 described above.

From the viewpoint of stabilizing the potential of the X-ray shielding member 80, the X-ray shielding member 80 desirably has the same potential as the anode 20 (is in an electrically connected state with the anode 20), but may have a different potential. The X-ray shielding member 80 is desirably made of a material that easily blocks X-rays, in particular, a metal material. The X-ray shielding member 80 may be made of a metal bulk material, or may be made of a metal thin film having a thickness of 100 µm or less. If a gap exists between the X-ray shielding member 80 and the insulating tube 10, insulation breakdown can occur. To prevent this, the X-ray shielding member 80 can be arranged to contact the outer surface 14 of the insulating tube 10. For example, the X-ray blocking member 80 can be formed by a plating method or a PVD method so as to contact the outer surface 14 of the insulating tube 10.

A potential different from the potential of the cathode 30 can be applied to the X-ray shielding member 80. For example, the potential of the anode 20 can be applied to the X-ray shielding member 80. In this case, the creepage distance between the cathode 30 and the X-ray shielding member 80 is shorter than the creepage distance between the cathode 30 and the anode 20 in a case where the X-ray shielding member 80 is not provided. This can cause abnormal discharge. Accordingly, the X-ray shielding member 80 is preferably covered with an insulating member 74. The insulating member 74 can be arranged to cover a contact portion (boundary) between the X-ray shielding member 80 and the insulating tube 10. In addition, the insulating member 74 can be arranged to cover the exposed portion (the portion not covered with the X-ray shielding member 80) of the outer surface 14 of the insulating tube 10. Preferably, the insulating member 74 can be arranged to cover the entire X-ray shielding member 80 and the entire exposed portion of the outer surface 14 of the insulating tube 10. The insulating member 74 can be arranged to cover a contact portion (boundary) between the cathode 30 (the closing member 31 thereof) and the insulating tube 10 as well. The insulating member 74 can be arranged to contact the outer surface of the X-ray shielding member 80. An outer surface 34 of the cathode 30 (the closing member 31 thereof) includes a cylindrical side surface and a circular bottom surface, and at least the entire side surface of the outer surface 34 of the cathode 30 can be covered with the insulating member 74. Furthermore, the entire outer surface 34 of the cathode 30 is preferably covered with the insulating member 74.

In a second space SP2, the first insulating member 73 (insulating partition) can be arranged spaced apart from the insulating tube 10 and an accommodating container 50 to surround the insulating tube 10 and the insulating member 74, but the first insulating member 73 may not be arranged. If the first insulating member 73 is not arranged, the X-ray shielding member 80 can suppress abnormal discharge caused by a first portion 52 of the accommodating container 50 (for example, when the first portion 52 is made of an insulator or when the first portion 52 is made of a conductor but in a floating state), an insulating liquid 60, or the second insulating member 74 being charged by the rear X-rays 105.

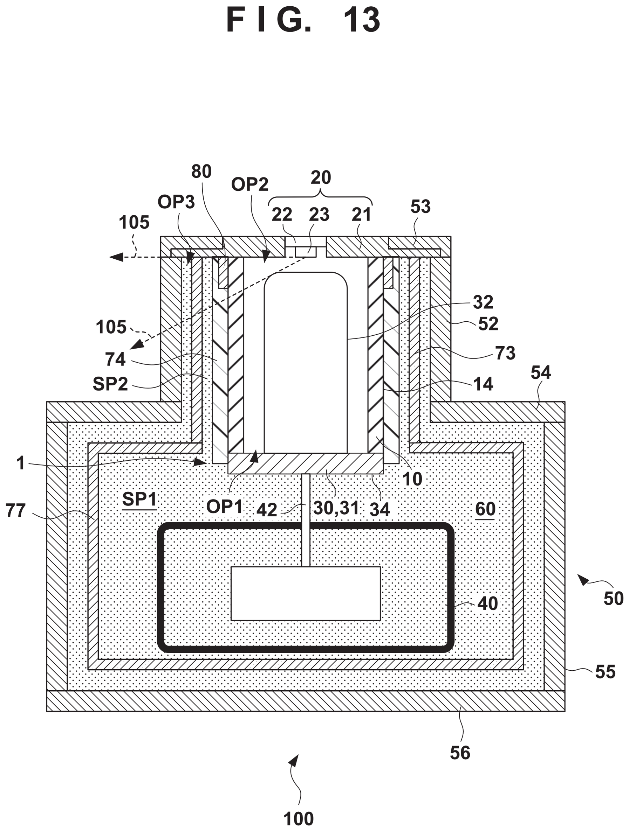

As exemplified in Fig. 13, the X-ray shielding member 80 need not block all the rear X-rays 105. Extending the X-ray shielding member 80 toward the cathode 30 can act to shorten the creepage distance. Therefore, the extension range of the X-ray shielding member 80 or the range over which the X-ray shielding member 80 covers the insulating tube 10 is decided in consideration of both the disadvantage of shortening the creepage distance and the advantage of blocking the rear X-rays 105. From another viewpoint, the extension range of the X-ray shielding member 80 can be decided in accordance with the intensity distribution of the rear X-rays 105.

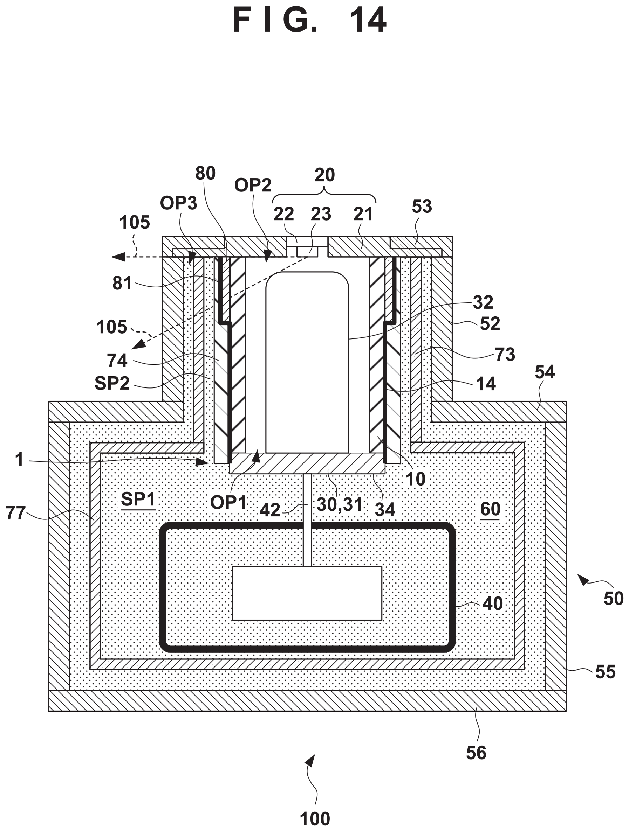

Fig. 14 exemplarily and schematically shows the arrangement of an X-ray generation apparatus 100 according to the seventh embodiment. Matters not mentioned in the seventh embodiment can comply with the first to sixth embodiments or the basic arrangement described with reference to Fig. 1. In one aspect of the seventh embodiment, an outer surface 14 of an insulating tube 10 is surrounded by an insulating member 74, and an adhesion layer 81 is provided between the outer surface 14 of the insulating tube 10 and the insulating member 74. Providing the adhesion layer 81 improves the adhesion between the outer surface 14 of the insulating tube 10 and the insulating member 74. This can reduce bubbles and/or gaps between the outer surface 14 of the insulating tube 10 and the insulating member 74, thereby reducing a decrease in dielectric strength and even the occurrence of abnormal discharge. The insulating member 74 can be arranged to cover a boundary between a cathode 30 (a closing member 31 thereof) and the insulating tube 10. The adhesion layer 81 and the insulating member 74 can be arranged to cover an entire outer surface 34 of the insulating tube 10. The adhesion layer 81 can be made of, for example, a silane coupling agent. The adhesion layer 81 may be made of a titanium coupling agent.

In another aspect, the X-ray generation apparatus 100 according to the seventh embodiment can include the X-ray shielding member 80 described in the sixth embodiment. If the X-ray shielding member 80 is provided, the adhesion layer 81 can also be arranged between the insulating member 74 and the X-ray shielding member 80.

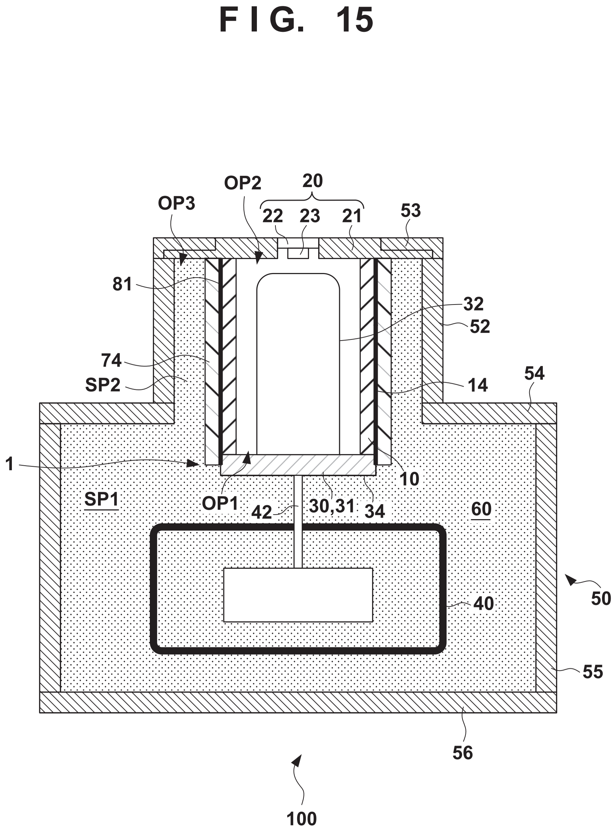

Fig. 15 exemplarily and schematically shows the arrangement of an X-ray generation apparatus 100 according to the eighth embodiment. Matters not mentioned in the eighth embodiment can comply with the first to seventh embodiments or the basic arrangement described with reference to Fig. 1. In one aspect of the eighth embodiment, an outer surface 14 of an insulating tube 10 is surrounded by an insulating member 74, and an adhesion layer 81 is provided between the outer surface 14 of the insulating tube 10 and the insulating member 74. Providing the adhesion layer 81 improves the adhesion between the outer surface 14 of the insulating tube 10 and the insulating member 74. This can reduce bubbles and/or gaps between the outer surface 14 of the insulting tube 10 and the insulating member 74, thereby reducing a decrease in dielectric strength and even the occurrence of abnormal discharge. The insulating member 74 can be arranged to cover a boundary between a cathode 30 (a closing member 31 thereof) and the insulating tube 10. The adhesion layer 81 and the insulating member 74 can be arranged to cover an entire outer surface 34 of the insulating tube 10. The adhesion layer 81 can be made of, for example, a silane coupling agent. The adhesion layer 81 may be made of a titanium coupling agent.

In the eighth embodiment, the X-ray generation apparatus 100 does not include a first insulating member 73, a third insulating member 77, and an X-ray shielding member 80. However, the adhesion layer 81 provided between the outer surface 14 of the insulating tube 10 and the insulating member 74 can reduce the occurrence of abnormal discharge.

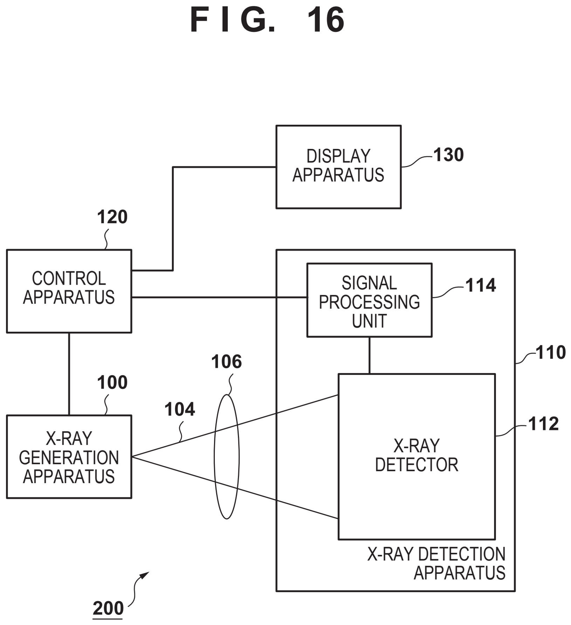

Fig. 16 shows the arrangement of an X-ray imaging apparatus 200 according to an embodiment. The X-ray imaging apparatus 200 can include an X-ray generation apparatus 100, and an X-ray detection apparatus 110 that detects X-rays 104 emitted from the X-ray generation apparatus 100 and transmitted through an object 106. The X-ray imaging apparatus 200 may further include a control apparatus 120 and a display apparatus 130. The X-ray detection apparatus 110 can include an X-ray detector 112 and a signal processing unit 114. The control apparatus 120 can control the X-ray generation apparatus 100 and the X-ray detection apparatus 110. The X-ray detector 112 detects or images the X-rays 104 emitted from the X-ray generation apparatus 100 and transmitted through the object 106. The signal processing unit 114 can process a signal output from the X-ray detector 112, and supply the processed signal to the control apparatus 120. The control apparatus 120 displays an image on the display apparatus 130 based on the signal supplied from the signal processing unit 114.

The present invention is not limited to the above embodiments and various changes and modifications can be made within the spirit and scope of the present invention. Therefore, to apprise the public of the scope of the present invention, the following claims are made.

## Claims

1. An X-ray generation apparatus comprising:
an X-ray generation tube including an insulating tube with a first opening end and a second opening end, a cathode arranged to close the first opening end of the insulating tube and including an electron emitting portion, and an anode arranged to close the second opening end and including a target that generates X-rays when electrons from the electron emitting portion collide;
a driving circuit configured to drive the X-ray generation tube, and
an accommodating container configured to accommodate the X-ray generation tube and the driving circuit,
wherein the accommodating container has a third opening end, and the X-ray generation tube is arranged to close the third opening end,
the accommodating container is filled with an insulating liquid,
the accommodating container defines a first space storing the driving circuit, and a second space protruding from the first space and storing at least a part of the X-ray generation tube,
the accommodating container includes a protrusion portion surrounding the second space, and one end of the second space forms the third opening end,
a portion of an outer surface of the insulating tube is surrounded by an X-ray shielding member extending from the anode toward the cathode so as to block X-rays, and
the X-ray shielding member is covered with an insulating member.

2. The X-ray generation apparatus according to claim 1, wherein
the X-ray shielding member extends from the anode to a position between the anode and the cathode.

3. The X-ray generation apparatus according to claim 1 or 2, wherein
the X-ray shielding member is in contact with the outer surface of the insulating tube.

4. The X-ray generation apparatus according to claim 3, wherein
the insulating member is in contact with the X-ray shielding member.

5. The X-ray generation apparatus according to any one of claims 1 to 3, wherein
the insulating member covers an entire outer surface of the X-ray shielding member.

6. The X-ray generation apparatus according to any one of claims 1 to 5, wherein
in the second space, an insulating partition is arranged spaced apart from the insulating tube and the accommodating container to surround the insulating tube and the insulating member.

7. The X-ray generation apparatus according to any one of claims 1 to 6, wherein
an outer surface of the cathode includes a cylindrical side surface and a circular bottom surface, and
at least the entire side surface of the outer surface of the cathode is covered with the insulating member.

8. The X-ray generation apparatus according to claim 7, wherein
the entire outer surface of the cathode is covered with the insulating member.

9. The X-ray generation apparatus according to any one of claims 1 to 8, wherein
the entire insulating tube is arranged in the second space.

10. The X-ray generation apparatus according to any one of claims 1 to 9, wherein
an adhesion layer is provided between the outer surface of the insulating tube and the insulating member.

11. The X-ray generation apparatus according to claim 10, wherein
the adhesion layer contains a silane coupling agent.

12. An X-ray generation apparatus comprising:
an X-ray generation tube including an insulating tube with a first opening end and a second opening end, a cathode arranged to close the first opening end of the insulating tube and including an electron emitting portion, and an anode arranged to close the second opening end and including a target that generates X-rays when electrons from the electron emitting portion collide;
a driving circuit configured to drive the X-ray generation tube, and
an accommodating container configured to accommodate the X-ray generation tube and the driving circuit,
wherein the accommodating container has a third opening end, and the X-ray generation tube is arranged to close the third opening end,
the accommodating container is filled with an insulating liquid,
the accommodating container defines a first space storing the driving circuit, and a second space protruding from the first space and storing at least a part of the X-ray generation tube,
the accommodating container includes a protrusion portion surrounding the second space, and one end of the second space forms the third opening end, and
an outer surface of the insulating tube is surrounded by an insulating member, and an adhesion layer is provided between the outer surface of the insulating tube and the insulating member.

13. The X-ray generation apparatus according to claim 12, wherein
the insulating member is arranged to cover a boundary between the cathode and the insulating tube.

14. The X-ray generation apparatus according to claim 12 or 13, wherein
the adhesion layer and the insulating member are arranged to cover the entire outer surface of the insulating tube.

15. The X-ray generation apparatus according to any one of claims 12 to 14, wherein
the insulating member is made of one of polytetrafluoroethylene, PMMA (polymethyl methacrylate resin), and an epoxy resin.

16. The X-ray generation apparatus according to any one of claims 1 to 15, wherein
the insulating liquid is an insulating oil.

17. An X-ray imaging apparatus comprising:
an X-ray generation apparatus defined in any one of claims 1 to 16; and
an X-ray detector configured to detect X-rays emitted from the X-ray generation apparatus.
